# EUROPEAN PATENT SPECIFICATION

(11) **EP 0 994 284 B1**
(45) Date of publication and mention of the grant of the patent: **09.04.2003**
(21) Application number: 99830414.1
(22) Date of filing: 30.06.1999
(51) Int. Cl.: F16K 31/163

(54) **Pneumatic actuator with non round cross-sectioned pistons**
Pneumatische Stellvorrichtung mit im Querschnitt nicht runden Kolben
Actionneur pneumatique avec des pistons à section transversale non-ronde

(30) Priority: 28.08.1998 IT BS980061
(43) Date of publication of application: 19.04.2000
(73) Proprietor: Mingotti, Alessandro, 25060 Ponte Zanano (Brescia) (IT)
(72) Inventor: Mingotti, Alessandro, 25060 Ponte Zanano (Brescia) (IT)
(74) Representative: Manzoni, Alessandro

(56) References cited:
- DE-A- 2 430 268
- DE-A- 3 925 887
- DE-U- 9 413 995
- US-A- 4 434 695
- US-A- 5 139 230
- US-A- 5 709 184

## Description

The present invention relates in particular to the pneumatic actuator sector for controlling the opening and dosing of ball, butterfly valves or similar.

A well known type of pneumatic actuator (see e.g. DE-U-94 13 995) for controlling valves consists of a body housing two coaxial pistons moving in opposite directions, each one having a clevis connected by a pin to an output shaft, perpendicular to the axis of the pistons, to which the valve shutter to be controlled is connected.

The shaft-piston connection is such that rotation in one direction and then in the other of the output shaft corresponds to the axial translation of the pistons.

According to the usual solutions, the pistons are cylindrical and are housed in corresponding cylindrical chambers shaped in the body of the actuator. The clevises are placed parallel to the geometric axes of the pistons and they extend in opposite directions from the output shaft, tangentially to the latter. In this way, the torque transmitted by each piston to the output shaft is proportional to the lever arm represented by the distance existing between the axis of the clevis connecting pin to the shaft and the geometric and sliding axis of the piston itself at right angles to the axis of said shaft. Usually, this distance is always less than, or at the most equal to the piston radius, so in order to increase the torque developed by the actuator the diameter of the pistons has to be increased, thus increasing, disadvantageously, the overall size of the actuator body.

The same considerations apply also to those actuators where instead of a clevis, the pistons have a rack, geared to a toothed pinion which turns with the output shaft (see e.g. DE-A-2 430 268).

The present invention aims at remedying this disadvantage and at the same time offering a pneumatic actuator for valves which, with the same external dimensions and consequently the same overall volume, is capable of developing greater torque towards the valve to be controlled.

The objective is achieved by increasing the lever arm of the transformation mechanism of the translatory motion of the pistons into rotary motion of the output shaft, but without substantially increasing the overall external volume of the actuator, as claimed in independent claims 1 and 6.

This increase in the lever arm is achieved by increasing the axis of the transversal cross-section of each piston in the plane where the connecting clevis(or rack) is to be found, thus increasing the distance of the clevis from the geometric and sliding axis of the piston.

In other words, each piston no longer has a circular cross-section, but preferably but not necessarily elliptic or oval, the ratio between the minor and major axis being less than 1 and where the connecting devis (or rack) is placed at one end of the major axis, therefore at the maximum distance from the geometric axis of the piston itself. Each piston is housed and slides in a non circular identical cross-sectioned chamber, and the body of the actuator may be larger in the direction of the major axis of the cross-section of the pistons, but narrower in the perpendicular direction to the first, that is on the plane containing the axis of the output shaft of the actuator.

Furthermore, a non round connection between the pistons and respective sliding chamber prevents pistons torqueing about their axis, thus enabling a transformation, without loss, of the thrust force acting on the pistons into torque on the output shaft of the actuator.

The actuator taken into consideration is also equipped with means for a simple and handy adjustment, within a range of about 90° and depending on the requirements of the controlled valve, of the stroke of the pistons and consequently of the rotation of the output shaft.

Further details of the invention will become even more evident from the rest of the description made in reference to the indicative and not limiting drawings enclosed, in which:
Fig. is a view in prospective of the exploded actuator,
Fig.2 is a longitudinal cross-section of the actuator taken from the output shaft plane;
Fig. 3 is a cross-section of the actuator on a level with one of the non-round pistons;
Fig. 4 is a longitudinal cross-section of the actuator taken from a plane at right angles to the output shaft;
Fig. 5 is a cross-section of the actuator on a level with the stroke adjustment means; and
Figs 6 and 7 are views in prospective of the assembled actuator seen from opposite sides.

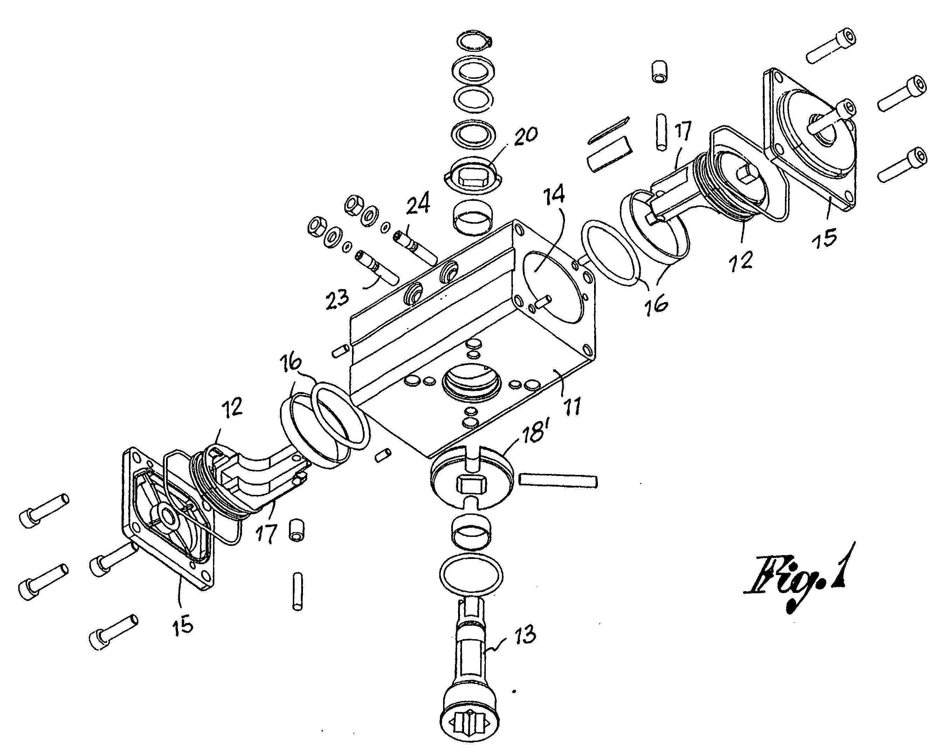

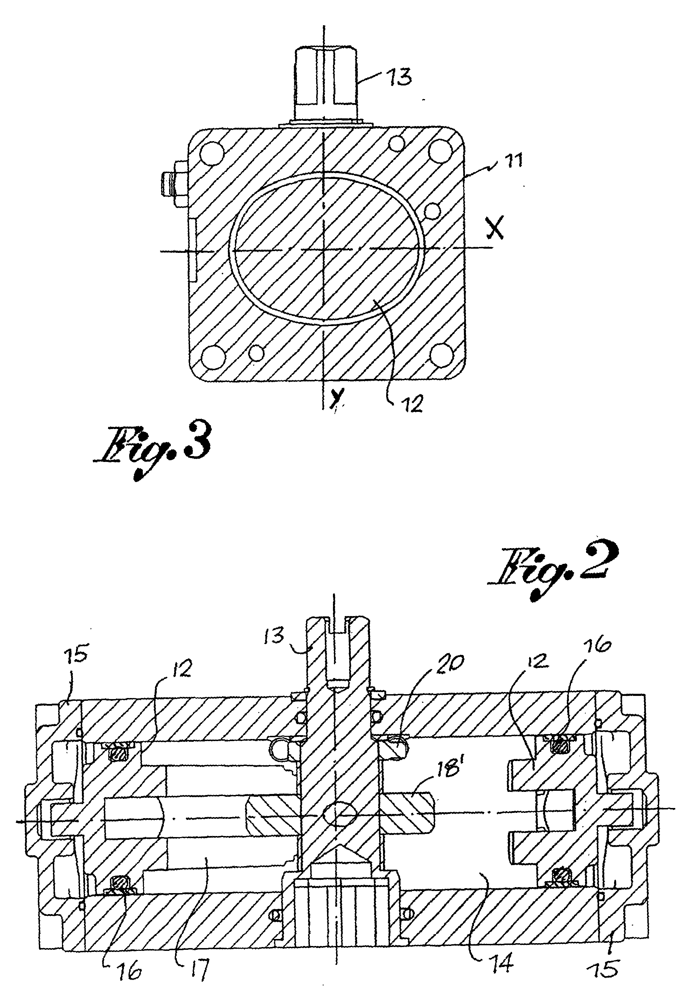

The actuator is made up principally of a body 11, two pistons 12, coaxial and moving in opposite directions, and an output shaft 13 to be connected to a device to be controlled such as a ball valve or similar - not shown.

In the body 11 there are two coaxial chambers 14 dosed on the outside end by a flange 15, each one housing a piston 12 with the interposition of elements 16 for a static and dynamic seal. In the centre of the body, between the chambers 14, there is a housing for the output shaft 13, which is placed perpendicular to the direction of the movement of the pistons 12 and which protrudes from the body to connect to the device to be controlled.

Each piston 12 has a clevis 17 on one end which extends, parallel to the sliding direction of the piston, towards the output shaft 13 and which is connected to the latter by means of a pin 18 and by a disk keyed to it 18'.

The chambers 14 are control fed, in the usual way through holes 19, by a fluid under pressure because of the alternating movements of the pistons in opposite directions according to their geometric axis, so that each translation of the pistons corresponds to the rotations of the output shaft 13 in one direction and in the other at angles of 90° so as to open and close the valve connected to it

Pistons 12, and consequently the chambers 14 in which the pistons are housed and in which they slide, have a non - round cross-section, preferably elliptic, oval or some other shape. The cross-section of each piston has an X axis on a perpendicular plane to the output shaft, that is to the axis of the valve to be controlled, which is greater than the Y axis parallel to the output shaft. As can be seen in the drawings, the connecting clevis 17 is positioned on a part of the relative piston on the plane of the X axis, at the farthest point from the longitudinal geometric axis of the piston itself, thus enabling the achievement of the objective and the advantages referred to above.

The output shaft 13 is also set to turn manually for manual opening and/or closing operations in the case of assistance or emergency on the valve controlled by the actuator.

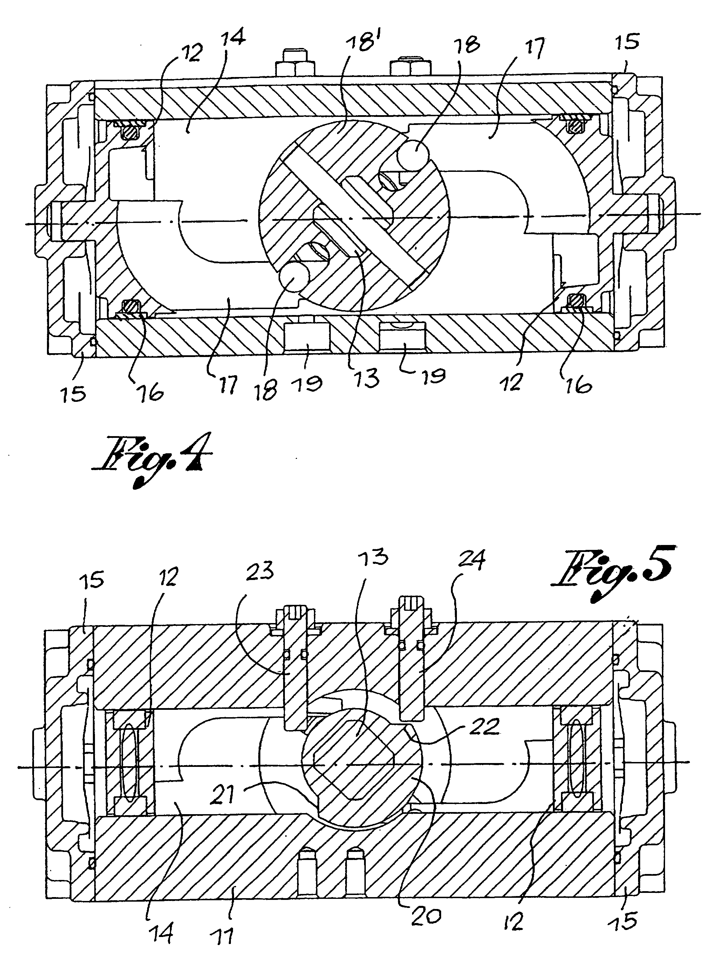

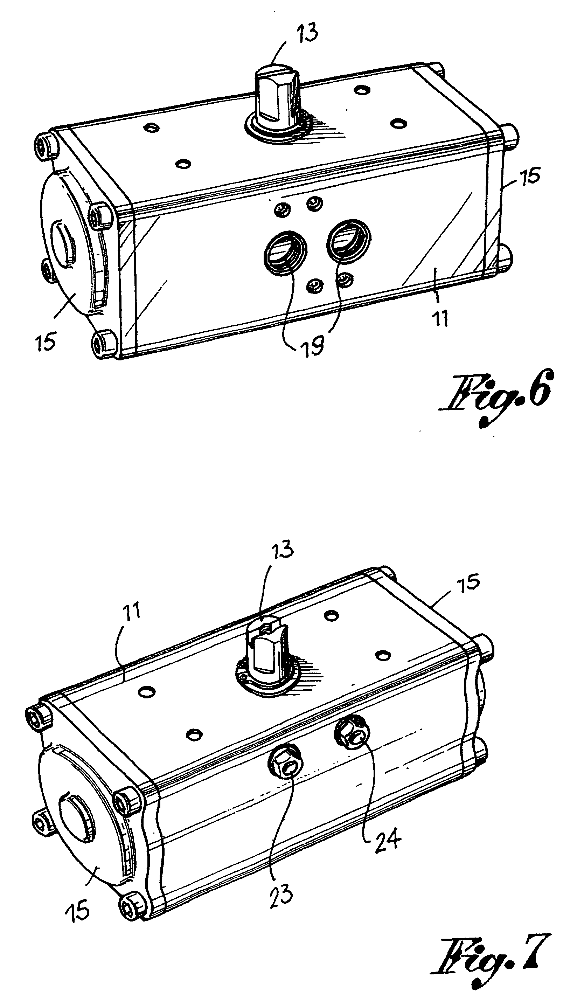

Also worthy of note is that the output shaft 13 can be fitted with a stroke limiting device 20 - Fig. 5 with two shoulders 21, 22 at angles to one another which by coming into contact alternatively with two externally adjustable position locator screws 23, 24, enable the rotation of the output shaft 13 to be adjusted through 90° according to the control and/or opening and closing requirements of the controlled valve, even when the actuator is operating (e.g., up to +3° in opening for ball valves; up to -7° in dosing of butterfly valves).

The same innovative feature can be applied also to actuators which have, instead of a clevis on the pistons connected to the output shaft, a rack-pinion type transmission where the racks move with pinions and the pinion turns with the output shaft and which, among other things, permits rotations of the shaft of over 90°.

## Claims

1. Actuator used in particular for controlling the opening and closing of ball valves, butterfly valves and similar, made up of a body (11), two coaxial pistons (12) moving in opposite directions along their longitudinal axis in chambers (14) placed in said body and connected to a fluid feed under pressure, and an output shaft (13) with its axis perpendicular to the piston axis and turning at a set angle in relation to the axial motion of said pistons, where each piston (12) has a clevis (17) on one end which connects up to the output shaft (13) by means of a coupling pin (16) and where the clevises (17) of the pistons extend from diametrically opposite ends of the output shaft (13), at a tangent to the latter and parallel to the movement direction of the pistons, an actuator **characterised by** the fact that each piston (12) and consequently the chamber (14) where it is housed and where it moves has a non round cross-section and the clevis (17) is placed at the maximum distance from the centre of this non round cross-section of the piston.

2. An actuator in compliance with claim 1, where the non round cross section of each piston (12) has an X axis on a plane at right angles to the axis of the output shaft (13) and a Y axis on a parallel plane to the axis of said output shaft, the connecting clevis (17) being on a part of the piston on the X axis of the non round cross-section.

3. An actuator according to claims 1 or 2, where each piston and consequently the chamber it is housed and it moves in, has an elliptical cross-section.

4. An actuator according to claims 1 or 2, where each piston and consequently the chamber it is housed and it moves has a cross-section which is oval, rectangular, rhombic or some other shape with straight, curved or mixed sides.

5. An actuator according to any of the previous claims, where the output shaft (13) is equipped with a stroke limiting device (20) having two shoulders (21,22) made to interact with two externally adjustable position locator screws (23, 24) to change the rotation angle of the output shaft caused by the motion of the pistons.

6. An actuator used in particular for controlling the opening and closing of ball valves, butterfly valves and similar, made up of a body (11), two coaxial pistons (12) moving in opposite directions along their longitudinal axis in chambers (14) placed in said body and connected to a fluid feed under pressure, and an output shaft (13) with its axis perpendicular to the piston axis and turning at a set angle in relation to the axial motion of said pistons, where each piston (12) has on one side a rack geared to a toothed pinion on the output shaft, **characterised by** the fact that each piston (12) and consequently the chamber (14) where it is housed and where it moves has a non round cross-section and the rack (17) is placed at the maximum distance from the centre of this non round cross-section of the piston, said piston having a cross-section which is either oval, rectangular, rhombic or some other shape with straight, curved or mixed sides.

## Patentansprüche

1. Aktuator, insbesondere zur Öffnungs- und Schließsteuerung von Kugelventilen, Drosselklappen und Ähnlichem verwendet, bestehend aus einem Körper (11), zwei koaxialen Kolben (12), die sich in entgegengesetzten Richtungen längs der Längsachse in Kammern (14) bewegen, die ihrerseits im besagten Körper untergebracht sind und an einer Druckflüssigkeitsversorgung angeschlossen sind, sowie aus einer Austrittswelle (13), deren Achse rechtwinklig zur Kolbenachse liegt und sich um einen voreingestellten Winkel im Verhältnis zur Achsenbewegung besagter Kolben dreht, wo jedes Ende des Kolbens (12) mit einer Gabel (17) versehen ist, die mit der Austrittswelle (13) durch einen Paarungsstift (16) verbunden ist und wo die Gabeln (17) der Kolben von den genau entgegengesetzten Enden der Austrittswelle (13) tangential zu dieser und parallel zur Bewegungsrichtung der Kolben ausgehen; der Aktuator kennzeichnet sich dadurch aus, dass jeder Kolben (12) mit der betreffenden Kammer (14), in der sich dieser befindet und bewegt, einen unkreisförmigen Querschnitt aufweist und dass sich die Gabel (17) in einem maximalen Abstand zur Mitte des besagten unkreisförmigen Querschnitts des Kolbens befindet.

2. Aktuator gemäß Anspruch 1, bei dem der unkreisförmige Querschnitt von jedem Kolben (12) eine größere Achse X auf einer rechtwinklig zur Achse der Austrittswelle (13) liegenden Ebene und eine kleinere Achse Y auf einer parallel zur Achse der besagten Austrittswelle liegenden Ebene aufweiset und sich die Verbindungsgabel (17) auf der Seite des Kolbens auf der Ebene der größeren Achse des unkreisförmigen Querschnitts befindet.

3. Aktuator gemäß den Ansprüchen 1 oder 2, bei dem jeder Koben mit der betreffenden Kammer, in der sich dieser befindet und bewegt, einen elliptischen Querschnitt aufweist.

4. Aktuator gemäß den Ansprüchen 1 oder 2, bei dem jeder Kolben mit der betreffenden Kammer, in der sich dieser befindet und bewegt, einen elliptischen, rechtwinkligen, rhomboiden oder andersförmigen Querschnitt mit geraden, kurvigen oder gemischten Seiten aufweist.

5. Aktuator gemäß eines beliebigen der vorhergehenden Ansprüche, bei dem die Austrittswelle (13) mit einem Hubbegrenzer (20) mit zwei Schultern (21, 22) versehen ist, die dazu bestimmt sind, mit zwei Anschlagsschrauben (23, 24) in von außen des Körpers einstellbarer Stellung zu interagieren, um den von den Kolbenbewegungen erzeugten Drehwinkel der Austrittswelle zu ändern.

6. Aktuator, insbesondere zur Öffnungs- und Schließsteuerung von Kugelventilen, Drosselklappen und Ähnlichem verwendet, bestehend aus einem Körper (11), zwei koaxialen Kolben (12), die sich in entgegengesetzten Richtungen längs der Längsachse in Kammern (14) bewegen, die ihrerseits im besagten Körper untergebracht sind und an einer Druckflüssigkeitsversorgung angeschlossen sind, sowie aus einer Austrittswelle (13), deren Achse rechtwinklig zur Kolbenachse liegt und sich um einen voreingestellten Winkel im Verhältnis zur Achsenbewegung besagter Kolben dreht, wo jedes Ende des Kolbens (12) auf einer Seite mit einer Zahnstange versehen ist, die in eine Ritzel auf der Austrittswelle eingreift, der Aktuator kennzeichnet sich dadurch aus, dass jeder Kobeln (12) mit der betreffenden Kammer (14), in der sich dieser befindet und bewegt, einen unkreisförmigen Querschnitt aufweist und dass sich die Zahnstange (17) in einem maximalen Abstand zur Mitte des besagten unkreisförmigen Kolbenquerschnitts befindet, wo besagter Kolben einen elliptischen, ovalen, rechtwinkligen, rhomboiden oder andersförmigen Querschnitt mit geraden, kurvigen oder gemischten Seiten aufweist.

## Revendications

1. Actionneur employé principalement pour contrôler l'ouverture et la fermeture de clapets à bille, de vannes papillon et similaires, constitué par un corps (11), par deux pistons coaxiaux (12) se déplaçant dans des directions opposées le long de l'axe longitudinal dans des chambres (14) prévues dans ledit corps et reliées à une amenée de fluide sous pression, et par un arbre de sortie (13) dont l'axe est perpendiculaire à l'axe des pistons et tourne d'un angle préfixé par rapport au mouvement axial desdits pistons, où chacune des extrémités du piston (12) présente une fourche (17) qui est reliée à l'arbre de sortie (13) par un tourillon d'accouplement (16) et où les fourches (17) des pistons s'étendent à partir des extrémités diamétralement opposées de l'arbre de sortie (13) en direction tangentielle par rapport à celui-ci et parallèlement à la direction de mouvement des pistons; l'actionneur est **caractérisé en ce que** chacun des deux pistons (12), avec la chambre correspondante (14) qui le contient et dans laquelle il se déplace, présente une section non circulaire et **en ce que** la fourche (17) est située à une distance maximale du centre de ladite section non circulaire du piston.

2. Actionneur d'après la revendication 1 où la section non circulaire de chaque piston (12) présente un axe supérieur X sur un plan orthogonal à l'axe de l'arbre de sortie (13) et un axe inférieur Y sur un plan parallèle à l'axe de l'arbre de sortie, la fourche d'union (17) se trouvant du côté du piston sur le plan de l'axe supérieur de la section non circulaire.

3. Actionneur d'après les revendications 1 ou 2 où chacun des pistons, avec la chambre respective où il est placé et dans laquelle il se déplace, présente une section elliptique.

4. Actionneur d'après les revendications 1 ou 2 où chacun des pistons, avec la chambre respective où il est placé et dans laquelle il se déplace, présente une section elliptique, rectangulaire ou rhomboïde ou d'autre forme ayant des côtés droits, courbés ou mixtes.

5. Actionneur d'après l'une quelconque des revendications précédentes où l'arbre de sortie (13) est doté d'un limiteur de course (20) présentant deux appuis latéraux (21, 22) destinés à interagir avec deux vis de rencontre (23, 24) à position réglable de l'extérieur du corps afin de modifier l'angle de rotation de l'arbre de sortie provoqué par les mouvements des pistons.

6. Actionneur employé en particulier pour contrôler l'ouverture et la fermeture de clapets à bille, de vannes papillon et similaires, constitué par un corps (11), par deux pistons coaxiaux (12) se déplaçant dans des directions opposées le long de l'axe longitudinal dans des chambres (14) prévues dans ledit corps et reliées à une amenée de fluide sous pression, et par un arbre de sortie (13) dont l'axe est perpendiculaire à l'axe des pistons et tourne d'un angle préfixé par rapport au mouvement axial desdits pistons, où chacune des extrémités du piston (12) présente, sur un côté, une crémaillère qui s'engrène avec un pignon denté sur l'arbre de sortie, **caractérisé en ce que** chacun des pistons (12), avec la chambre correspondante (14) qui le contient et dans laquelle il se déplace, présente une section non circulaire, et la crémaillère (17) est située à une distance maximale du centre de ladite section non circulaire du piston, où ledit piston présente une section elliptique, ovale, rhomboïde ou d'autre forme à côtés droits, courbes ou mixtes.
